(19) Europäisches Patentamt

European Patent Office

Office européen des brevets

(11) Veröffentlichungsnummer: **0 101 054**
**B1**

(12) # EUROPÄISCHE PATENTSCHRIFT

(45) Veröffentlichungstag der Patentschrift:
**26.07.89**

(51) Int. Cl.⁴: **B 60 R 9/04**

(21) Anmeldenummer: **83107867.0**

(22) Anmeldetag: **09.08.83**

(54) Gepäckträger für Fahrzeuge, insbesondere Campingfahrzeuge.

(30) Priorität: **09.08.82 DE 3229623**

(43) Veröffentlichungstag der Anmeldung:
**22.02.84 Patentblatt 84/8**

(45) Bekanntmachung des Hinweises auf die Patenterteilung:
**26.07.89 Patentblatt 89/30**

(84) Benannte Vertragsstaaten:
**AT CH DE FR IT LI**

(56) Entgegenhaltungen:
**EP-A- 0 014 185**
**DE-U- 7 934 167**
**DE-U- 8 102 136**
**DE-U- 8 203 179**
**FR-A- 2 501 601**

(73) Patentinhaber: **Heinrich Wunder GmbH & Co. KG,
Münchener Strasse 80 Postfach 1920, D-8060 Dachau
(DE)**

(72) Erfinder: **Zoor, Reinhold, Hohenzollernplatz 1,
D-8000 München 40 (DE)**

(74) Vertreter: **Zmyj, Erwin, Dipl.-Ing., Rosenheimer
Strasse 52, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Gepäckträger für Fahrzeuge, insbesondere Campingfahrzeuge oder Wohnmobile, mit einem am Fahrzeug befestigbaren Basisteil und einem auf dem Basisteil abgestützten, die zu transportierenden Gegenstände aufnehmenden Oberteil, das mindestens zwei hohle, jeweils mit einem durchlaufendem Schlitz versehene Gleitschienen aufweist, in denen Rollen oder Gleitkörper aufgenommen sind, die an den Enden der Tragschienen des Basisteiles symmetrisch zu diesem für die Gleitschienen angeordnet sind.

Bei einem bekannten Dachträger dieser Art (DE-U 8 102 136) sind in den hohlen Tragschienen Rollenkörper drehbar gelagert, von denen jeweils eine an einem Ende der Tragschiene angeordnet ist. Die Rollen ragen durch Öffnungen in den Tragschienen über deren obere Oberfläche hinaus. Die Gleitschienen sind im wesentlichen U-förmig ausgebildet und übergreifen mit ihren nach unten gerichteten U-Schenkeln die Tragschienen, wobei sie mit ihrem U-Steg auf den Rollen aufliegen und dadurch gegenüber den Tragschienen verschiebbar sind. Für die Transportstellung greifen die Rollen in Ausnehmungen im U-Steg ein, so daß dieser unmittelbar auf der jeweils zugeordneten Tragschiene aufruht. Mittels Rollen oder Gleitkörper sind die U-Schenkel seitlich an den Tragschienen abgestützt. Diese Führungsrollen dienen zur Erleichterung der Verschiebbarkeit der Gleitschiene gegenüber der zugeordneten Tragschiene. Andererseits bewirken sie eine spielfreie Abstützung der jeweiligen Gleitschiene gegenüber der Tragschiene quer zu deren Längserstreckung beziehungsweise Längsrichtung des Fahrzeuges. Diese Abstützung ist notwendig, um eine Verschiebung des Oberteiles gegenüber dem Grundrahmen zu vermeiden, weil diese Verschiebungen in Verbindung mit der großen Last, die das Oberteil aufzunehmen hat, beim Anfahren und Bremsen zu sehr großen stoßartigen Kräften an den Befestigungspunkten des Grundrahmens führt.

Trotz dieser aufwendigen Führung kann es zu einem Verkanten und damit zu einer schwergängigen Verschiebbarkeit des Oberteiles gegenüber dem Grundrahmen kommen, weil die Gleitschienen mittels quer zu ihnen, d.h. in Längsrichtung des Fahrzeuges verlaufenden Streben starr untereinander zu dem Oberteil verbunden sind. Bei dieser Ausgestaltung ist das Oberteil nur dann leichtgängig gegenüber dem Grundrahmen verschiebbar, wenn Gleitschienen und Tragschienen ganz exakt parallel zueinander laufen, was eine exakte Fertigung des Grundrahmens und des Oberteiles sowie eine äußerst exakte Montage auf dem Fahrzeugdach voraussetzt. Sind diese Voraussetzungen nicht gegeben, was häufig der Fall ist, dann kann es zu Zwangsverkantungen und damit zu einer Schwergängigkeit bei der Verschiebung des Oberteiles gegenüber dem Grundrahmen kommen, was insbesondere auch noch durch eine schwere, ungleichmäßige Beladung des Gepäckträgers gefördert wird.

Aufgabe der Erfindung ist es, eine leichte Bedienbarkeit des Gepäckträgers zu ermöglichen.

Diese Aufgabe wird ausgehend von dem eingangs erläuterten gattungsgemäßen Gepäckträger erfindungsgemäß dadurch gelöst, daß die Gleitschienen des Oberteiles flexibel bzw. gegeneinander bewegbar miteinander verbunden sind. Durch diese sehr flexible und lose Verbindung, wodurch ein gewisser Freiheitsgrad in der gegenseitigen Bewegbarkeit der beiden Gleitschienen besteht, wird ein Verkanten dieser Gleitschienen gegenüber ihren Tragschienen trotz möglicher Montagefehler bei der Befestigung der Tragschienen am Fahrzeug oder ungleichmäßig verteilter Lasten vermieden, weil durch die gegenseitige Bewegbarkeit der Gleitschienen ein Ausgleich in dem Sinne möglich ist, daß jede Gleitschiene exakt an ihrer Tragschiene geführt bleibt, ohne daß es zu Zwangsverkantungen und damit zu einer Schwergängigkeit kommt.

In vorteilhafter Ausgestaltung der Erfindung können die Gleitschienen durch Streben oder durch die zu transportierenden Gegenstände miteinander verbunden sein. Bei dieser Ausgestaltung treten die weiter oben geschilderten Wirkungen und Vorteile ein, da sich die Gleitschienen den jeweiligen Verhältnissen anpassen können, ohne daß es zu einem Verklemmen gegenüber den Tragschienen kommt. Zur Verbindung der Gleitschienen eignen sich beispielsweise Transportbehälter, die auf Dachträgern befestigt sind. Die Ausgestaltung des Oberteils in dieser Art, daß dieses Oberteil entweder durch Streben oder durch die zu transportierenden Gegenstände, wie zum Beispiel Transportbehälter untereinander beweglich bzw. gelenkig oder kardanisch miteinander verbunden sind, ergibt sich insbesondere dann ein wesentlicher Vorteil, wenn die Tragschienen auf unterschiedlichen Ebenen angeordnet sind, wie dies beispielsweise bei Wohnmobilen oder Campingbussen der Fall ist, die im hinteren Bereich ein Stufendach aufweisen, so daß die hintere Tragschiene auf einer wesentlich höheren Ebene liegt. Hierdurch ergibt sich, daß die zu transportierenden Gegenstände gegenüber der Horizontalen einen Winkel einnehmen, was zur Folge hat, daß beim Herausziehen des Gepäckträgers und Herunterkippen der Gleitschienen dieses Abkippen nur dann möglich ist, wenn die Verbindung zwischen den beiden Gleitschienen bzw. der an den Gleitschienen befestigte zu transportierende Gegenstand sich gegenüber den Gleitschienen bewegen kann, weil die Kippunkte, um die die Gleitschienen kippen auf unterschiedlichen Höhen liegen. Mit einem starren Rahmen wäre ein Abkippen gar nicht möglich, weil die Gleitschienen aufgrund der unterschiedlichen Höhen in der Transportstellung in der gekippten Stellung nicht mehr vertikal nach unten hängen würden, sondern schräg zur Vertikalen, was ein Verdrehen der Gleitschienen in bezug auf die Führungsrollen zur Folge haben würde, was aber aufgrund der exakten Führung nicht möglich ist.

Eine vorteilhafte Ausgestaltung der Erfindung, die Voraussetzung für weitere Ausgestaltungen dieser Erfindung ist, besteht darin, daß sowohl die Tragschiene als auch die Gleitschiene im wesentlichen einen H-Querschnitt aufweisen, wobei die nach oben und unten ragenden Schenkel an ihren Enden jeweils nach innen abgebogen sind und ihre Ränder jeweils einen oberen und unteren Schlitz begrenzen. Eine solche Ausgestaltung der Gleit- und Tragschienen hat nicht nur eine hohe Biege- und Torsionssteifigkeit und leichte Befestigungsmöglichkeit für Halter der zu transportierenden Gegenstände zur Folge, sondern ermöglicht weitere Ausgestaltungen, die einer leichten Bedienbarkeit des Gepäckträgers dienen.

Für diese leichtere Bedienbarkeit ist es unter anderem vorteilhaft, wenn in weiterer Ausgestaltung der Erfindung an denjenigen Enden der Tragschienen, über die die Gleitschienen gezogen und abgekippt werden, Halter für die Rollen oder Gleitkörper angeordnet sind, die jeweils zwei koaxial zueinander gelagerte Rollen oder Gleitkörper vor und über der Auflagefläche für die Gleitschienen halten und jeder Halter durch den Schlitz der zugeordneten Gleitschiene in das durch die nach unten ragenden Schenkel und die nach innen abgebogenen Ränder gebildete Hohlprofil eingreift, in denen die Rollen oder Gleitkörper vollständig aufgenommen sind. Hierdurch ist unter Beibehaltung der großen Steifigkeit der Gleitschiene, die bis auf den Schlitz nahezu vollständig in sich geschlossen ist, eine Führung für die Gleitschiene geschaffen, bei der zusätzliche seitliche Führungsrollen entfallen können und zwar insbesondere schon deshalb, weil eine gegenseitige zwangsweise Beeinflussung beider Gleitschienen durch die flexible Verbindung derselben ausgeschlossen ist, so daß kaum seitliche Kräfte auftreten.

Um bei einer solchen Ausgestaltung die Leichtgängigkeit besonders zu fördern, können die Rollen- oder Gleitkörper an ihren äußeren Stirnflächen ballig ausgeführt sein. Hierdurch tritt bei einer Berührung zwischen der Gleitschiene und der Stirnfläche der Rollen- oder Gleitkörper eine punktförmige Berührung und keine Flächenberührung ein, wie dies bei ebenen Stirnflächen der Fall ist, die hierdurch viel leichter zu einem Verkanten und Verklemmen neigen. Dies wird durch die ballige Ausgestaltung vermieden.

Um eine leichtgängige Verschiebung beim Be- und Entladen des Gepäckträgers bei einer gleichzeitigen spielfreien Halterung des Oberteils in der Transportstellung zu ermöglichen, liegt jede Gleitschiene des Oberteiles mit dem Schlitz nach unten vollständig über der zugeordneten Tragschiene fluchtend zu dieser, die jeweils einen Führungssteg aufweist, der in der Transportstellung spielfrei in den Schlitz der Gleitschiene eingreift. Dabei ist es vorteilhaft, wenn in Weiterbildung der Erfindung der Führungssteg aus einem Material mit guten Gleiteigenschaften besteht und im Querschnitt eine ballige Form aufweist, wobei der Bereich mit der größten Breite, die die Schlitzbreite der Gleitschiene etwas übersteigt, in der Transportstellung innerhalb der hohlen Gleitschiene liegt.

Hierdurch ist die Gleitschiene spielfrei in und gegen die Fahrtrichtung gehalten, so daß die eingangs erwähnten stoßartigen Kräfte an den Befestigungspunkten des Basisteiles nicht auftreten können. Weiterhin wird hierdurch erreicht, daß nach dem Aufsetzen der Gleitschiene auf die Tragschiene die Gleitschiene auch gegen ein Abheben aufgrund der balligen Form durch den Führungssteg weitgehend gesichert ist, da dieser nur aufgrund einer, wenn auch äußerst geringfügigen, elastischen Verformung der Gleitschiene und des Führungssteges in die Gleitschiene eindringen kann. Diese Haltekräfte reichen selbstverständlich nicht aus, um eine zusätzliche Sicherung in der Transportstellung überflüssig zu machen, jedoch werden hierdurch Erschütterungen, die sich aus dem Fahrbetrieb ergeben, soweit aufgefangen, daß sich das Oberteil nicht ohne weiteres gegenüber dem Basisteil in vertikaler Richtung bewegen kann, d.h. das Oberteil wird aufgrund dieser Ausgestaltung daran gehindert, bei Fahrstößen in Schwingungen in vertikaler Richtung zu geraten.

Um Klappergeräusche, die durch ein unmittelbares Aufliegen der Gleitschiene auf der Tragschiene entstehen können, wie dies bei der bekannten Ausgestaltung der Fall ist, zu vermeiden, kann in weiterer Ausgestaltung der Erfindung in der Transportstellung die dem Schlitz gegenüberliegende Innenwandfläche der Gleitschiene auf der Oberseite des Führungssteges aufruhen. Dies ist insbesondere dann vorteilhaft, wenn der Führungssteg aus einem gute Gleiteigenschaften aufweisenden elastischen Kunststoff besteht.

Eine Schwergängigkeit bei der Bedienung des Gepäckträgers, d.h. beim Anheben und Verschieben der Gleitschienen kann auch dadurch bedingt sein, daß der Gepäckträger zu groß und/oder in beladenem Zustand zu schwer ist. Wenn dies der Fall ist, so kann die leichte Bedienbarkeit des Gepäckträgers auch dadurch erreicht werden, daß jeder Tragschiene zwei Gleitschienen zugeordnet sind, die nach entgegengesetzten Richtungen über die Tragschiene hinausschiebbar sind.

Bei dieser Ausgestaltung wird also der Gepäckträger in zwei Teile geteilt, wobei der eine Teil über die einen Enden der Tragschienen und der andere Teil über die gegenüberliegenden Enden der Tragschienen hinausschiebbar und abkippbar ist. Durch die Halbierung des Gepäckträgers bzw. der Gleitschiene wird einerseits erreicht, daß mit der Verkürzung der Gleitschiene auch die Verkantungsgefahr verringert wird und außerdem wird hierdurch wegen der kleineren Beladungsfläche auch das von den jeweiligen Gepäckträgerhälften aufnehmbare Gewicht begrenzt, so daß aus dieser Sicht eine Bedienungserleichterung eintritt.

Bei dem eingangs erläuterten bekannten Dachträger kann die Gleitschiene von den Rollen abgezogen werden, was beim Entladen des Dachträgers, insbesondere dann gefährlich werden kann, wenn der Boden neben dem Fahrzeug abschüssig ist, so daß das vordere Ende der Gleitschienen nicht auf dem Boden abgestützt werden kann, solange die Rollen noch im Eingriff mit der Gleitschiene stehen. Bei einer anderen bekannten Ausführungsform eines Dachträgers (US-B 3 186 569) ist die hohle Gleitschiene am Ende verschlossen, so daß sich hieraus ein Anschlag ergibt, der sich an den Rollen abstützt. Dies hat jedoch zur Folge, daß Fälle eintreten können, in denen das Oberteil nicht ausreichend durch den Benutzer beim Abkippen gehalten wird, so daß größere Schläge auf die Rollenhalterung eintreten können, was zur Beschädigung dieser Halterung führen kann. Um alle diese erläuterten Nachteile zu vermeiden ist gemäß einer weiteren vorteilhaften Ausgestaltung der Erfindung zumindest an einer Außenseite der Tragschiene an dem den Halter tragenden vorderen Ende ein feststehendes Fangteil für einen am hinteren Ende der Gleitschiene an deren Außenseite angeordneten, dem Durchmesser des Rollen- bzw. Gleitkörpers entsprechenden Anschlagkörper vorgesehen und weiterhin fluchtet das Zentrum der den Anschlagkörper aufnehmenden Aussparung des Fangteiles mit der Achse des Rollen- oder Gleitkörpers.

Durch die Anordnung eines Fangteiles an der Tragschiene und die Anordnung eines Anschlagkörpers an der Gleitschiene wird erreicht, daß die Rollenhalterung frei von Belastungen gehalten wird, wenn die Gleitschiene am Ende ihrer Kipp- und Gleitbewegung angehalten werden soll, was zuweilen sehr ruckartig erfolgen kann. Durch die weitere Ausgestaltung, wonach das Zentrum der Ausnehmung des Fangteiles für die Aufnahme des Anschlagkörpers mit der Achse der Rollen- oder Gleitkörper fluchtet wird erreicht, daß die Gleitschiene auch noch gekippt werden kann, wenn sie sich am Ende ihrer Schiebebewegung an dem Anschlagkörper am Fangteil befindet.

Um ein einfaches Verriegeln des Oberteiles in seiner Transportstellung zu ermöglichen, ist in weiterer Ausgestaltung der Erfindung am vorderen Ende der Gleitschiene ein gegen die Wirkung der Feder schwenkbarer Sperrhaken vorgesehen, der mit dem Fangteil in der Transportstellung zusammenwirkt und damit die Gleitschiene verriegelt. Der schwenkbare Sperrteil dient somit als Rastfalle, die beim Einschieben des Oberteils in seine endgültige Transportlage von selbst einrastet.

Um ein unbefugtes Lösen des Oberteiles aus der gesicherten Transportlage zu verhindern, kann in weiterer Ausgestaltung der Erfindung der Sperrteil in der mit dem Fangteil verrasteten Stellung durch ein Schloß verriegelbar sein.

Damit die Gleitschiene in der Transportstellung nicht abgehoben werden kann, kann in weiterer Ausgestaltung der Erfindung der Anschlagkörper mit einem am hinteren Ende der Tragschiene angeordneten Sicherungsteil zusammenwirken.

Bei leichteren Gepäckträgern oder bei solchen die unterteilt sind, wobei die eine Gleitschiene nach der einen und die andere Gleitschiene nach der anderen Seite ausziehbar und abkippbar ist, so daß bereits von der zur Verfügung stehenden Fläche eine geringere Belastung zu erwarten ist, kann eine leichtere und einfachere Ausgestaltung zur Verrastung der Gleitschiene vorgesehen sein.

Diese kann in weiterer Ausgestaltung der Erfindung so ausgebildet sein, daß am vorderen, den Rollen- oder Gleitkörpern in der Transportstellung zugeordneten Ende der Gleitschiene ein Anschlagkörper verstellbar gehalten ist, der in der Transportstellung an den Rollen- oder Gleitkörpern anliegt und die Gleitschiene sperrt. Dieser Anschlagkörper kann an einer Blattfeder befestigt sein, deren eines Ende an dem dem Schlitz gegenüberliegenden Quersteg der Gleitschiene befestigt ist und deren anderes Ende als Handhabe aus der Gleitschiene herausragt und der Anschlagkörper kann in einer Bohrung des Querstegs geführt sein. Mittels dieser Blattfeder, deren eines Ende aus der Gleitschiene herausragt, kann der Anschlagkörper in seiner Führungsbohrung verschoben und somit die Verriegelung gelöst werden.

Um ein Lösen dieser Verriegelung in unbefugter Weise verhindern zu können, kann auf das Ende der Gleitschiene ein abschließbares Endstück aufschiebbar sein.

Die Erfindung ist in der Zeichnung beispielsweise dargestellt. In dieser zeigen:

Fig. 1 eine schaubildliche Ansicht eines Fahrzeuges mit einem erfindungsgemäßen Gepäckträger;

Fig. 2 eine schaubildliche Teilansicht des mit II gekennzeichneten Bereiches in Fig. 1, die eine Trag- und eine Gleitschiene des Basisteiles und des Oberteiles darstellt;

Fig. 3 eine Vorderansicht der Trag- und Gleitschiene in der Transportstellung;

Fig. 4 einen Querschnitt durch eine Trag- und Gleitschiene in der Transportstellung;

Fig. 5 eine Teilansicht des vorderen Endes der Trag- und Gleitschiene in der verriegelten Transportstellung;

Fig. 6 eine der Fig. 1 entsprechende Darstellung einer weiteren Ausführungsform eines Gepäckträgers;

Fig. 7 eine weitere Ausgestaltung eines Gepäckträgers;

Fig. 8 eine Vorderansicht in Einzeldarstellung eines Halters mit Rollkörpern;

Fig. 9 einen Längsschnitt im Bereich des mit Rollkörpern versehenen Endes einer abgeänderten Ausführungsform;

Fig. 10 einen Längsschnitt durch das hintere Ende der geänderten Ausführungsform gemäß Fig. 9; und

Fig. 11 eine Ansicht eines Gepäckträgers nach Fig. 6 in einer anderen Einbaulage.

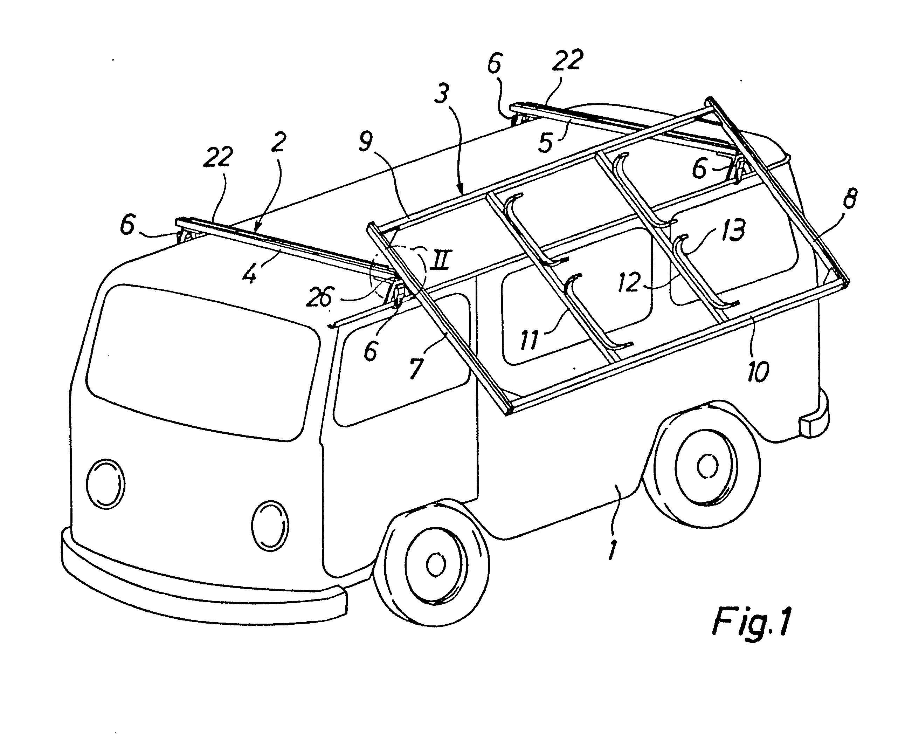

Aus Fig. 1 ist ersichtlich, daß der Gepäckträger grundsätzlich einen zweiteiligen Aufbau aufweist und ein Basisteil 2 sowie ein Oberteil 3 umfaßt. Das Basisteil 2 besteht aus zwei parallel zueinander angeordneten Tragschienen 4, 5, die mittels Halterungen, z.B. Stützfüssen 6 in üblicher Weise am Fahrzeugdach oder auch an anderen Stellen eines Fahrzeuges befestigt sein können.

Das Oberteil ist bei einer ersten Ausführungsform als in sich geschlossener Rahmen ausgeführt und weist zwei Gleitschienen 7, 8, zwei Längsstreben 9 und 10 sowie zwei zusätzliche, parallel zu den Gleitschienen 7 und 8 angeordnete Querstreben 11 und 12 auf. Die Längsstreben 9 und 10 sind mit den Gleitschienen 7 und 8 fest verbunden, während die Querstreben 11 und 12 an den Längsstreben 9 und 10 befestigt sind. Die Querstreben 11 und 12 tragen spezielle Halter 13, die im dargestellten Beispiel für die Aufnahme von Segelbrettern dienen. Diese Halter können durch andere Halter, beispielsweise für Ski oder Fahrräder oder durch übliche Gepäckkörbe bzw. Gepäckkoffer ersetzt sein.

Da die Gleitschienen 7 und 8 identisch ausgeführt und in gleicher Weise gegenüber der jeweils zugeordneten Tragschiene geführt sind, erfolgt die nachfolgende Beschreibung nur unter Bezugnahme auf die Gleitschiene 7 und die zugeordnete Tragschiene 4, weil auch hier die Tragschiene 5 der Tragschiene 4 entspricht.

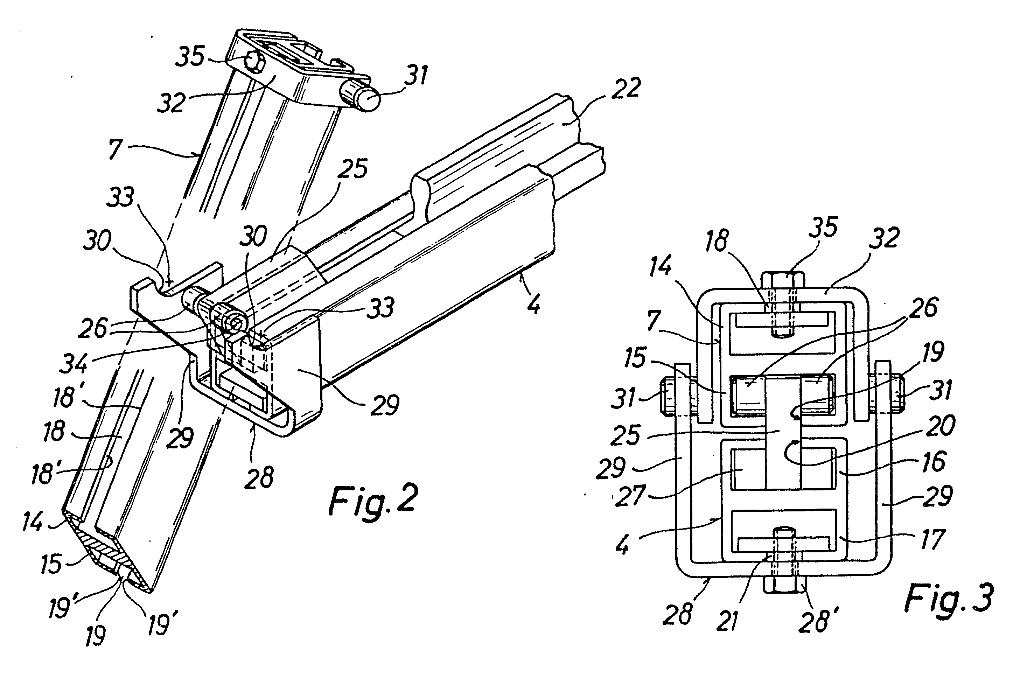

Wie aus den Fig. 2 bis 4 ersichtlich, bestehen die Trag- und Gleitschienen jeweils aus H-Profilen, deren freie Schenkelenden nach innen abgebogen sind. Es entsteht so ein doppeltes Hohlprofil, wobei jeder Profilteil 14, 15 der Gleitschiene 7 bzw. 16, 17 der Tragschiene 4 jeweils einen längslaufenden durchgehenden Schlitz 18, 19 bzw. 20, 21 aufweist, der durch die Ränder 18', 19' bzw. 20', 21' der abgebogenen Schenkelenden begrenzt ist.

Die Tragschiene 4 trägt in ihrem oberen Profilteil 16 einen Führungssteg 22, der mit einem Sokkelteil 23 in dem Hohlprofilteil 16 gehalten ist. Der Führungssteg 22 weist eine leicht ballige Form auf und paßt spielfrei in den Schlitz 19 des unteren Profilteiles 15 der Gleitschiene 7. Die breiteste Stelle des Führungssteges 22, die mit 24 bezeichnet ist, liegt in der Transportstellung innerhalb des Hohlprofilteiles 15 und ist geringfügig breiter als dies der Breite des Schlitzes 19 entspricht, so daß beim Aufsetzen der Gleitschiene 7 auf die Tragschiene 4 dies nur bei einer leichten Verformung des Führungssteges 22 möglich ist, der aus einem Kunststoff besteht, der elastisch ist und gute Gleiteigenschaften aufweist. In der Transportstellung ist also die Gleitschiene 7 durch einen geringen Druckknopfeffekt auf der Tragschiene gehalten.

Am vorderen Ende der Tragschiene, d.h. an dem Ende, an welchem die Kippbewegung des Oberteils des Gepäckträgers möglich ist, ist in dem oberen Profilteil 16 der Tragschiene 4 ein Halter 25 in Form eines Auslegers angeordnet, der zur Lagerung von zwei Rollen 26 dient. Der Halter 25 ist symmetrisch in bezug auf die Tragschiene mit einem Stützfuß 27 in dem oberen Profilteil 16 befestigt und hält die Rollen 26 zu seinen beiden Seiten symmetrisch zu den Längsachsen der Gleit- und Tragschiene vor der Stirnkante und oberhalb der Oberkante der Tragschiene 4. Auf diese Weise bleibt zur Tragschiene hin genügend Platz, um die Gleitschiene 7, in deren unteren Profilteil 15 die Rollen 26 aufgenommen sind, nach unten abkippen zu können, wie dies aus den Fig. 1 und 2 hervorgeht. Aufgrund der Führung der Gleitschiene auf den Rollen 26, wobei diese Führung so weit als möglich spielfrei gehalten ist, kann die Gleitschiene und damit der Oberteil nicht nur gegenüber der Tragschiene verschoben, sondern in jeder relativen Verschiebelage von Gleitschiene zur Tragschiene gekippt werden, weil eine formschlüssige Verbindung, d.h. eine Sicherung gegen Abheben der Gleitschiene von der Tragschiene nur durch diese Rollen 26 gegeben ist. Nur an dieser Stelle kann die Gleitschiene von der Tragschiene nicht abgehoben sondern nur gegenüber der Gleitschiene gekippt werden.

Beim Kippen der Gleitschiene gegenüber der Tragschiene wird das spielfreie Ineinandergreifen des Führungssteges 22 in die Gleitschiene gelöst, was nach einem gewissen Verschiebeweg aufgrund des auftretenden nach unten wirkenden Kippmoments ohne weiteres möglich ist. Aufgrund des spielfreien Ineinandergreifens zwischen Führungssteg 22 und Gleitschiene 7 wird erreicht, daß die von dem Oberteil aufgenommene Last gegenüber den Tragschienen in der Transportstellung, in welcher Fahrstöße auf den Gepäckträger einwirken, keine Bewegungsmöglichkeit besitzt. Am vorderen Ende der Tragschiene 4 ist ein Fanghaken 28 angeordnet, der mittels einer Schraube 28' am unteren Profilteil 17 befestigt ist und zwei Flügel 29 aufweist, die sich zu beiden Seiten der Tragschiene 4 befinden. Jeder dieser Flügel weist eine Ausnehmung 30 auf, in die jeweils ein Anschlagkörper 31, der mittels einer Halterung 32 am hinteren Ende der Gleitschiene 7 befestigt ist, eingreifen kann, wenn sich die Gleitschiene 7 in ihrer vollständig ausgezogenen Lage befindet. Da die Anschlagkörper 31 den gleichen Durchmesser wie die Rollen 26 aufweisen, und da das Zentrum der Ausnehmung 30, welches mit 33 bezeichnet ist, mit der Achse 34 der Rollen 26 fluchtet, liegen diese Anschlagkörper in der vollständig ausgezogenen Lage fluchtend mit den Rollen 26 so, daß auch in dieser Stellung, in welcher die Gleitschiene gegen ein vollständiges Abziehen von der Tragschiene gesichert ist, ein Verschwenken der Gleitschiene gegenüber der Tragschiene möglich ist. Da der Fanghaken 27 an der Tragschiene und die Anschlagkörper 31 an der Gleitschiene mittels der Schrauben 28' und 35 einstellbar festgelegt sind, können keine Kräfte beim Auffangen der nach unten gleitenden Gleitschiene auf die Rollen übertragen werden, so daß deren Lagerung keiner zusätzlichen Belastung ausgesetzt ist.

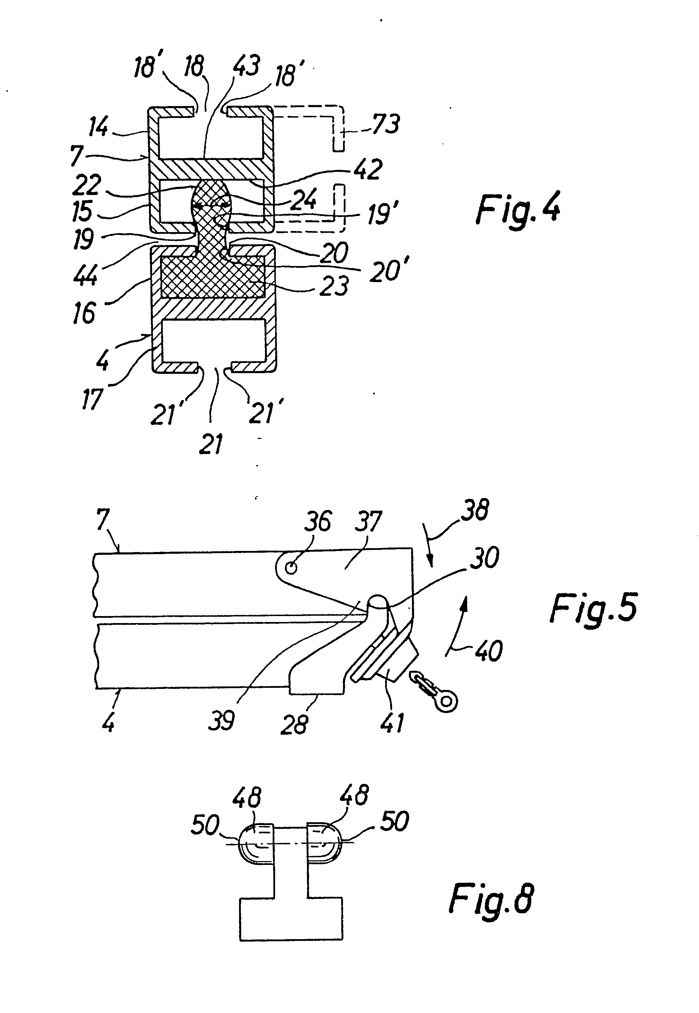

Am vorderen Ende der Gleitschiene 7 ist, wie aus Fig. 5 ersichtlich, ein um eine Achse 36 schwenkbar gelagerter Sperrhaken 37 vorgesehen, der nach Art einer Rastfalle durch eine nicht dargestellte Feder in Richtung des Pfeiles 38 belastet ist, so daß er nach dem vollständigen Einschieben der Gleitschiene in die Transportstellung mit einem Ansatz 39 in die Aussparung 30 des Fanghakens 27 einrastet. Zum Lösen dieser Verbindung muß der Sperrhaken 37 in Richtung des Pfeiles 40 entgegen der Wirkung der nicht dargestellten Feder angehoben werden. Mittels eines Schlosses 41 kann der Sperrhaken 37 in der verriegelten Stellung festgehalten werden, so daß die Gleitschiene und damit das gesamte Oberteil in der Transportstellung, in welcher die Gleitschiene vollständig über der Tragschiene liegt, gesichert ist. In dieser Transportstellung wird das Gewicht des Oberteils und der zu transportierenden Gegenstände von dem Führungssteg 22 aufgenommen, da die Innenwand 42 des Quersteges 43 des unteren Profilteiles 15 der Gleitschiene auf den Führungssteg aufruht, wobei zwischen der Tragschiene 4 und der Gleitschiene 7, wie aus Fig. 4 ersichtlich, ein Spalt verbleibt, der mit 44 bezeichnet ist.

In der Transportstellung ist die Gleitschiene 7 gegen ein Abheben von der Tragschiene 4 durch den Sperrhaken 37 der mit dem Fanghaken 28 am vorderen Ende der Tragschiene und durch den Anschlagkörper 31, der mit einem nicht dargestellten Sicherungshaken am hinteren Ende der Tragschiene zusammenwirkt, gesichert.

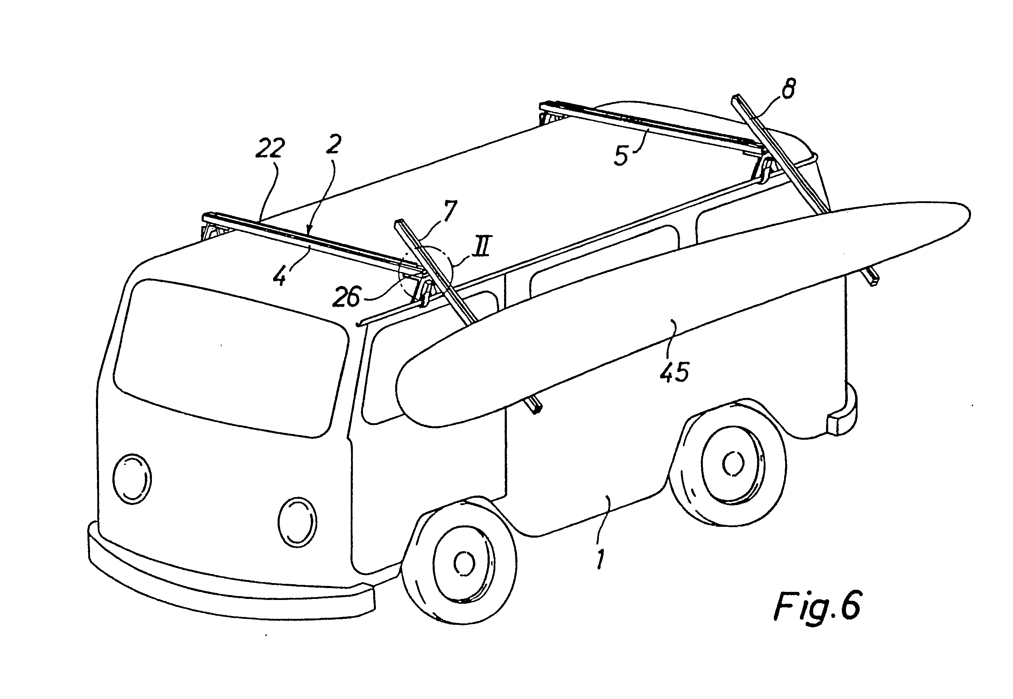

In Fig. 6 ist eine andere Ausführungsform des Gepäckträgers nach der Erfindung gezeigt, bei welcher das Oberteil des Gepäckträgers nicht mehr aus einem in sich versteiftem Gestell, sondern nur aus den Gleitschienen 7 und 8 besteht. Diese Gleitschienen sind unabhängig voneinander auf den Tragschienen 4 und 5 verschiebbar und nur über den zu transportierenden Gegenstand, z.B. ein Surfbrett 45, miteinander verbunden. Hierdurch ergibt sich eine sehr lose Verbindung zwischen den Gleitschienen 7 und 8, welche die unabhängige klemmfreie Verschiebung jeder dieser Gleitschienen auf ihrer zugeordneten Tragschiene nicht behindert. Bei einem etwaigen Montagefehler hinsichtlich der Parallelität der Tragschienen 4 und 5, kann dieser Fehler durch die lose Verbindung über das Surfbrett ausgeglichen werden, so daß bei der Verschiebung keine Klemmkräfte zwischen den Gleitschienen und den Tragschienen auftreten.

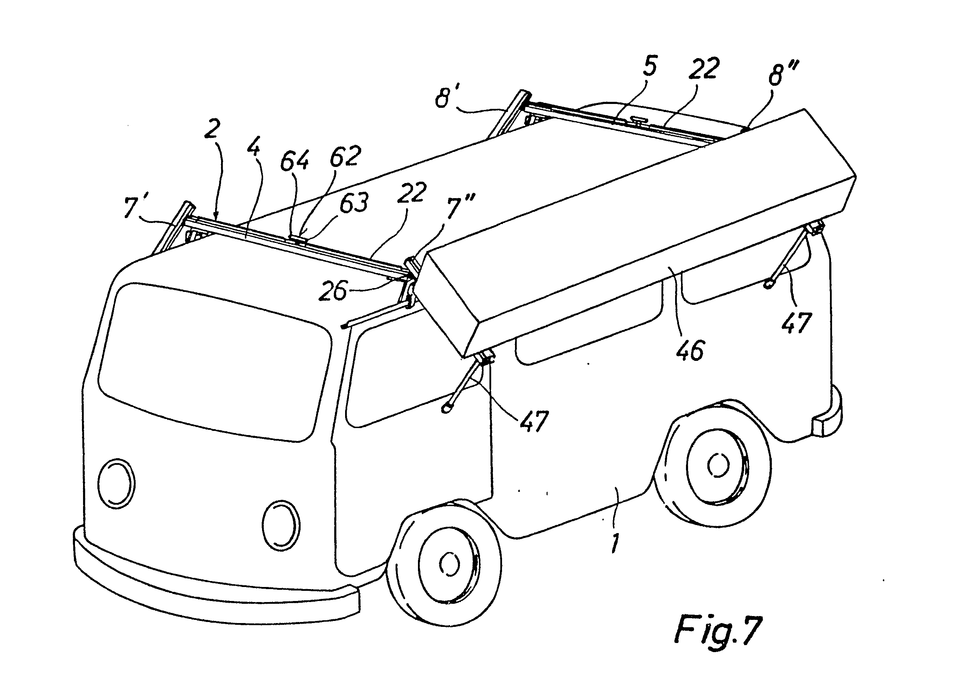

Die Ausgestaltung nach Fig. 7 stellt eine Weiterentwicklung der Ausführungsform nach Fig. 6 dar, da sie nicht nur eine unabhängige Führung der den Tragschienen 4 und 5 zugeordneten Gleitschienen ermöglicht, weil auch hier die Gleitschienen untereinander nicht verbunden sind, sondern diese Ausführungsform weist die Besonderheit auf, daß jede Gleitschiene einer Tragschiene in zwei Teile unterteilt ist, die nach unterschiedlichen Richtungen der Gleitschiene verschoben und damit auch nach unterschiedlichen Richtungen abgekippt werden kann. Bei der Ausführungsform nach Fig. 7 sind die der Tragschiene 4 zugeordneten Gleitschienen 7', 7" und die der Tragschiene 5 zugeordneten Gleitschienen mit 8', 8" bezeichnet.

Diese Ausgestaltung ist insbesondere dann empfehlenswert, wenn der Gepäckträger sehr breit wird und dadurch verhältnismäßig lange Gleitschienen mit entsprechend großer Gepäckaufnahmemöglichkeit entstehen. Durch die Unterteilung der Gleitschienen bleiben die einzelnen Gepäckträger-Oberteile 7', 8', bzw. 7", 8", verhältnismäßig schmal, so daß diese beiden Oberteile jeweils für sich ein geringeres Gepäckgewicht aufweisen, als dies bei einem einteiligen Oberteil, beispielsweise nach Fig. 1 oder 6 der Fall ist. Hierdurch ist die Bedienung des Gepäckträgers erleichtert. Außerdem neigen die kürzeren Gleitschienen bei einer Verschiebung nicht so schnell zum Verklemmen wie lange Gleitschienen. Selbst wenn keine Montage- oder Fertigungsfehler vorliegen, sind kurze Gleitschienen wegen der geringeren Eingriffslänge mit dem Verbindungssteg 22 leichter verschiebbar.

Bei den Ausführungsformen nach den Fig. 6 und 7 ist der gleiche Aufbau der Tragschienen vorgesehen, wie bei der Ausführungsform nach den Fig. 1 bis 4. Auch der Aufbau der Gleitschienen entspricht demjenigen nach den Fig. 1 bis 4, sieht man von der Unterteilung der Gleitschienen in zwei Teile bei der Ausführungsform nach Fig. 7 ab.

Bei der Ausgestaltung nach Fig. 7 sind die Gleitschienen 7" und 8" durch einen Gepäckkoffer 46 miteinander verbunden, der mit diesen Gleitschienen so verschraubt ist, daß eine Ausgleichsbewegung, d.h. eine gegenseitige Ausrichtung der Gleitschienen hinsichtlich ihrer Parallelität möglich ist. Mit 47 sind Stützfüße bezeichnet, bei denen die Gleitschienen 7" und 8" zusammen mit dem Koffer 46 gegen das Fahrzeug 1 abgestützt werden können, um den Koffer beladen zu können, da dies in dem völlig abgekippten Zustand kaum möglich wäre. Diese Stützfüße 47 können in Profilschienen 73 geführt sein, die an der Seite der Profilschienen 7 und 8, bzw. 7" und 8", vorgesehen sind. Eine solche zusätzliche Profilausbildung ist mit gestrichelter Linie in Fig. 4 angedeutet.

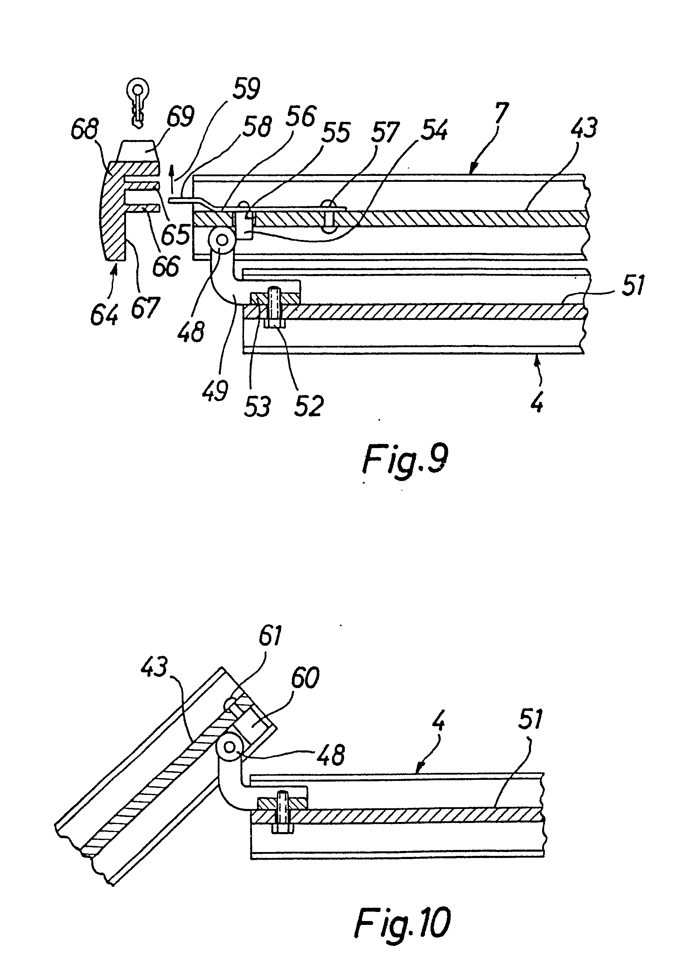

Die Fig. 8 zeigt eine Ansicht von besonders bevorzugten Rollen 48 an einem Halter, die deshalb vorteilhaft sind, weil ihre Stirnflächen 50 ballig ausgeführt sind, so daß bei einer Berührung mit der Innenwand des Hohlprofils der Gleitschiene stets nur eine punktförmige Berührung und keine Flächenberührung eintritt, was die Leichtgängigkeit bei der Verschiebung der Gleitschiene gegenüber der Tragschiene fördert.

Die Fig. 9 und 10 zeigen die Darstellungen des vorderen und hinteren Endes einer Trag- und Gleitschiene mit einer besonders wirtschaftlichen Ausbildung derjenigen Teile, die zur Führung und Verrastung der Gleitschiene dienen. Die Trag- und Gleitschiene ist ebenfalls wie bei der Ausführungsform der Fig. 1 bis 4 ausgebildet, weshalb die gleichen Bezugszeichen verwendet sind. In der Tragschiene 4 ist am Quersteg 51 ein Halter 49 mittels Schrauben 52 befestigt. Dieser Halter ist aus einem Flacheisen gebogen und mit Befestigungsflanschen 53 versehen. Bei der Ausführungsform nach den Fig. 1 bis 4 ist der Halter 25 als gefrästes Teil ausgebildet, wodurch er wesentlich teurer ist. Die in den Fig. 9 und 10 gezeigten Rollen 48 entsprechen denjenigen nach Fig. 8. Zur Verrastung der Gleitschiene 7 in der Transportstellung dient ein Rastkörper 54, der als Zapfen ausgebildet und in einer Bohrung 55 des Quersteges 43 geführt ist. Der Rastkörper 54 ist an einer Blattfeder 56 befestigt, die ihrerseits am Quersteg 43 mittels Nieten 57 gehalten ist. Das freie Ende dieser Blattfeder ragt als Handhabe 58 über das vordere Ende der Gleitschiene 7 heraus. Diese Blattfeder 56 hält den Rastkörper 54 in der in Fig. 9 dargestellten Lage, in welcher er an der Rolle 48 anliegt und so ein Herausziehen der Gleitschiene 7 verhindert. Durch Anheben der Blattfeder 56 in Richtung des Pfeiles 59 wird der Anschlagkörper 54 in seiner Bohrung 55 nach oben verschoben, so daß er von der Rolle 48 freikommt. Hierdurch kann die Gleitschiene nach vorne ausgezogen und nach unten abgekippt werden, wie dies in den Fig. 6 und 7 gezeigt ist. Am hinteren Ende der Gleitschiene 7 ist ein fest eingesetzter Anschlagkörper 60 vorgesehen, der mit dem Quersteg 43 durch einen Niet 61 verbunden ist. Dieser Anschlagkörper 60 legt sich in der vollständig ausgezogenen Lage der Gleitschiene 7 an die Rolle 48 an, wodurch ein vollständiges Herausziehen der Gleitschiene 7 verhindert wird. Während der Schwenkbewegung liegt der Anschlagkörper 60 ebenfalls an jeder der Rollen 48 an. Diese Anschlagkörper 60, von denen jeweils einer einer Rolle 48 zugeordnet ist, ersetzen die außen angeordneten Anschlagkörper 31 bei der Ausführungsform nach Fig. 3 und machen wegen ihrer Anlage an den Rollen 48 auch den Fanghaken 28 überflüssig, wodurch diese Ausführungsform nach den Fig. 9 und 10 wesentlich billiger in der Fertigung ist.

Bei der zweiteiligen Ausgestaltung der Gleitschienen 7', 7'', bzw. 8', 8'', ist in der Mitte einer jeden Tragschiene 4 bzw. 5 ein Anschlag 62 mit zwei nach beiden Verschieberichtungen überstehenden Flügeln 63 vorgesehen, wodurch nicht nur eine Begrenzung der jeweiligen Gleitschiene erreicht wird, sondern die Flügel 63 greifen in der Endstellung unter die nach innen abgebogenen Schenkel des Gleitschienenprofils, wodurch die Gleitschiene nicht mehr von der Tragschiene an ihrem hinteren Ende abgehoben werden kann. Der Anschlag 62 ist in Fig. 7 dargestellt.

In Fig. 9 ist auch noch ein abschließbares Endstück 64 dargestellt, welches mit zwei Rippen 65 und 66 in das obere Hohlprofil der Gleitschiene eingreift, während der untere Teil 67 das untere Hohlprofil der Gleitschiene abdeckt. An einem oberen Steg 68 ist ein Schloß 69 gehalten.

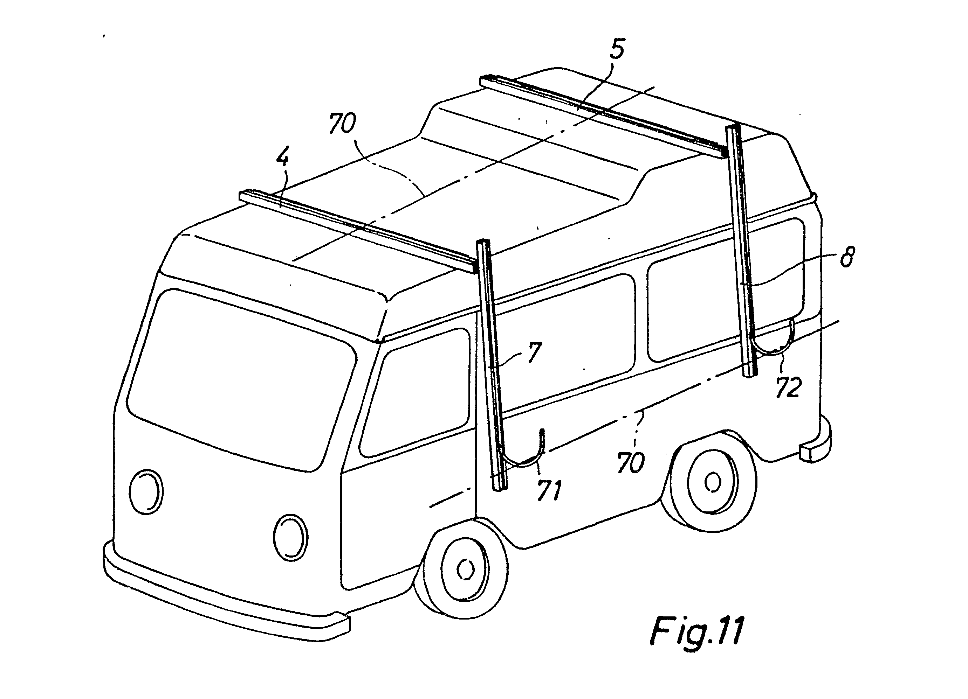

In Fig. 11 ist eine besondere Einbaulage des Gepäckträgers nach Fig. 6 dargestellt. Die Besonderheit besteht darin, daß die hintere Tragschiene 5 wegen des stufenförmig ausgebildeten Daches des Fahrzeuges sich auf einer höheren Ebene befindet als die vordere Tragschiene 4. Hierdurch nimmt ein zu transportierender Gegenstand, dessen Längsachse mit einer strichpunktierten Linie 70 angedeutet ist, eine gegenüber der Horizontalen geneigte Lage ein. Wenn nun die Gleitschienen 7 und 8 in die abgekippte Stellung überführt werden, in der sie in Fig. 11 dargestellt sind, so ist dies nur dann möglich, wenn sich der zu transportierende Gegenstand 70 gegenüber diesen Gleitschienen in seinen Halterungen 71 und 72 bewegen kann, d.h. die Verbindung, die der zu transportierende Gegenstand 70 zwischen den beiden Gleitschienen 7 und 8 herstellt, muß gelenkig, bzw. kardanisch sein, weil sich die Enden der Gleitschienen auf unterschiedlichen Höhen in der gekippten Stellung befinden, weil auch die Schwenkpunkte, um die die Gleitschienen nach unten kippen, auf unterschiedlichen Höhen wegen der Stufendachausbildung bei dem dargestellten Kraftfahrzeug liegen.

**Patentansprüche**

1. Gepäckträger für Fahrzeuge, insbesondere Campingfahrzeuge oder Wohnmobile, mit einem am Fahrzeug befestigbaren Basisteil (2) und einem auf dem Basisteil abgestützten, die zu transportierenden Gegenstände aufnehmenden Oberteil (3) das mindestens zwei hohle, jeweils mit einem durchlaufenden Schlitz versehene Gleitschienen (7, 8) aufweist, in den Rollen (26, 48) oder Gleitkörper aufgenommen sind, die an den Enden von Tragschienen (4, 5) des Basisteils symmetrisch zu diesen für die Gleitschienen angeordnet sind, dadurch gekennzeichnet, daß die Gleitschienen (7, 8) des Oberteils (3) flexibel bzw. gegeneinander bewegbar miteinander verbunden sind.

2. Gepäckträger nach Anspruch 1, dadurch gekennzeichnet, daß die Gleitschienen (7, 8) durch Streben (9, 10) oder durch die zu transportierenden Gegenstände (46) miteinander verbunden sind.

3. Gepäckträger nach Anspruch 1 oder 2, dadurch gekennzeichnet, daß sowohl die Tragschiene (4) als auch die Gleitschiene (7) im wesentlichen einen H-Querschnitt aufweisen, wobei die nach oben und unten ragenden Schenkel an ihren Enden jeweils nach innen abgebogen sind und ihre Ränder (18', 19'; 20', 21') jeweils einen oberen und unteren Schlitz (18, 19; 20, 21) begrenzen.

4. Gepäckträger nach einem der Ansprüche 1 bis 3, dadurch gekennzeichnet, daß an diejenigen Enden der Tragschienen (4, 5) über die die Gleitschienen (7, 8) gezogen und abgekippt werden Halter (45, 49) für die Rollen (26, 48) oder Gleitkörper angeordnet sind, die jeweils zwei koaxial zueinander gelagerte Rollen (26, 48) oder Gleitkörper vor und über der Auflagefläche für die Gleitschienen (7, 8) halten, und daß jeder Halter (25, 49) durch den Schlitz (19) der zugeordneten Gleitschiene (4, 5) in das durch die nach unten ragenden Schenkel und die nach innen abgebogenen Ränder gebildete Hohlprofil eingreift, in denen die Rollen (26, 48) oder Gleitkörper vollständig aufgenommen sind.

5. Gepäckträger nach einem der Ansprüche 1 bis 4, dadurch gekennzeichnet, daß die Rollen (48) oder Gleitkörper an ihren äußeren Stirnflächen (50) ballig ausgeführt sind.

6. Gepäckträger nach einem der Ansprüche 1 bis 5, dadurch gekennzeichnet, daß jede Gleitschiene (7, 8) des Oberteils (3) mit dem Schlitz (14) nach unten vollständig über der zugeordneten Tragschiene (4, 5) fluchtend zu dieser liegt, die jeweils einen Führungssteg (22) aufweist, der in der Transportstellung spielfrei in den Schlitz (19) der Gleitschiene (7, 8) eingreift.

7. Gepäckträger nach Anspruch 6, dadurch gekennzeichnet, daß der Führungssteg (22) aus einem Material mit guten Gleiteigenschaften besteht und im Querschnitt eine ballige Form aufweist, wobei der Bereich mit der größten Breite (24), die die Schlitzbreite der Gleitschiene (7, 8) etwas übersteigt, in der Transportstellung innerhalb der hohlen Gleitschiene (7, 8) liegt.

8. Gepäckträger nach Anspruch 6 oder 7, dadurch gekennzeichnet, daß in der Transportstellung die dem Schlitz (19) gegenüberliegende Innenwandfläche (42) des Quersteges (43) der Gleitschiene (7, 8) auf der Oberseite des Führungssteges (22) aufruht.

9. Gepäckträger nach einem der Ansprüche 1 bis 8, dadurch gekennzeichnet, daß jeder Tragschiene (4, 5) zwei Gleitschienen (7', 8'; 7'', 8'') zugeordnet sind, die nach entgegengesetzten Richtungen über die Tragschienen (4, 5) hinausschiebbar sind.

10. Gepäckträger nach einem der Ansprüche 1 bis 9, dadurch gekennzeichnet, daß zumindest an einer Außenseite jeder Tragschiene (4, 5) an jedem einen Halter (25) tragenden Ende ein feststehendes Fangteil (28, 29) für einen am hinteren Ende der Gleitschiene (7) an deren Außenseite angeordneten, dem Durchmesser der Rollen (26) bzw. Gleitkörper entsprechenden Anschlagkörper (31) vorgesehen ist, und daß das Zentrum (33) der den Anschlagkörper (31) aufnehmenden Aussparung (30) des Fangteiles (28, 29) mit der Achse (34) der Rollen (26) oder Gleitkörper fluchtet.

11. Gepäckträger nach einem der Ansprüche 1 bis 10, dadurch gekennzeichnet, daß am vorderen Ende der Gleitschienen (7, 8) ein gegen die Wirkung der Feder schwenkbares Sperrteil (37) vorgesehen ist, das mit dem Fangteil (28, 29) in der Transportstellung zusammenwirkt und damit die Gleitschiene verriegelt.

12. Gepäckträger nach Anspruch 11, dadurch gekennzeichnet, daß das Sperrteil (37) in der mit dem Fangteil (28, 29) verrasteten Stellung durch ein Schloß (41) verriegelbar ist.

13. Gepäckträger nach einem der Ansprüche 10 bis 12, dadurch gekennzeichnet, daß der Anschlagkörper (31) in der Transportstellung mit einem am hinteren Ende der Tragschiene (4, 5) angeordneten Sicherungsteil zusammenwirkt, der ein Abheben der Gleitschiene (7, 8) verhindert.

14. Gepäckträger nach einem der Ansprüche 1 bis 9, dadurch gekennzeichnet, daß am vorderen, den Rollen (26) oder Gleitkörpern in der Transportstellung zugeordneten Ende der Gleitschiene (7, 8) ein Anschlagkörper (54) verstellbar gehalten ist, der in der Transportstellung an den Rollen oder Gleitkörpern anliegt und die Gleitschiene (7) bzw. Verriegelung sperrt.

15. Gepäckträger nach Anspruch 14, dadurch gekennzeichnet, daß der Anschlagkörper (54) an einer Blattfeder (56) befestigt ist, deren eines Ende an dem dem Schlitz (19) gegenüberliegenden Quersteg (43) der Gleitschiene (7, 7') befestigt ist, und deren anderes Ende als Handhabe (58) aus der Gleitschiene herausragt, und daß der Anschlagkörper (54) in einer Bohrung (55) des Querstegs (43) geführt ist.

16. Gepäckträger nach einem der Ansprüche 1 bis 15, dadurch gekennzeichnet, daß auf das Ende der Gleitschiene (7, 8) ein abschließbares Endstück (64) aufschiebbar ist.

**Claims**

1. Luggage rack for vehicles, especially camping vehicles or campers, having a base part (2) securable to the vehicle and an upper part (3) supported on the base part and receiving the objects to be transported and having at least two hollow slide rails (7, 8) each provided with a continuous slit, rollers (26, 48) or slide elements being received in these slide rails (7, 8) and being arranged at the ends of mounting rails (4, 5) of the base part, symmetrical to these, for the slide rails, characterized in that the slide rails (7, 8) of the upper part (3) are connected to one another flexibly or mutually movably.

2. Luggage rack according to Claim 1, characterized in that the slide rails (7, 8) are connected to one another by struts (9, 10) or by the objects (46) to be transported.

3. Luggage rack according to Claim 1 or 2, characterized in that both the mounting rail (4) and the slide rail (7) are of substantially H-shaped cross-section, the legs projecting upward and downward at their ends each being bent inward and their edges (18', 19'; 20', 21') respectively defining an upper and lower slit (18, 19; 20, 21).

4. Luggage rack according to one of Claims 1 to 3, characterized in that at those ends of the mounting rails (4, 5) over which the slide rails (7, 8) are drawn and tilted, holders (45, 49) are arranged for the rollers (26, 48) or slide elements which respectively hold two rollers (26, 48) or slide elements mounted coaxially to one another in front of and above the support surface for the slide rails (7, 8), and in that each holder (25, 49) engages through the slit (19) of the associated slide rail (4, 5) into the hollow section formed by the downwardly projecting leg and the inwardly bent edges, in which hollow section the rollers (26, 48) or slide elements are completely received.

5. Luggage rack according to one of Claims 1 to 4, characterized in that the rollers (48) or slide elements are constructed spheroid at their outer end faces (50).

6. Luggage rack according to one of Claims 1 to 5, characterized in that each slide rail (7, 8) of the upper part (3) lies with the slit (14) downwards, completely above the associated mounting rail (4, 5) and flush with the latter, which has a respective guide web (22) which engages without play in the slit (19) of the slide rail (7, 8) in the transport position.

7. Luggage rack according to Claim 6, characterized in that the guide web (22) comprises a material having good sliding properties and has a spheroid shape in cross-section, the region with the largest width (24), which somewhat exceeds the slit width of the slide rail (7, 8), lying inside the hollow slide rail (7, 8) in the transport position.

8. Luggage rack according to Claim 6 or 7, characterized in that, in the transport position, the inner wall surface (42), lying opposite the slit (19), of the transverse web (43) of the slide rail (7, 8) rests on the upper side of the guide web (22).

9. Luggage rack according to one of Claims 1 to 8, characterized in that there are associated with each mounting rail (4, 5) two slide rails (7', 8'; 7", 8") which are pushable over the mounting rails (4, 5) in opposed directions.

10. Luggage rack according to one of Claims 1 to 9, characterized in that there is provided at least on one outer side of each mounting rail (4, 5) on each end carrying a holder (25) a fixed receiving part (28, 29) for a stop element (31) which is arranged at the back end of the slide rail (7) on the outer side thereof and which corresponds to the diameter of the rollers (26) or slide elements, and in that the centre (33) of the recess (30), receiving the stop element (31), of the receiving part (28, 29) is flush with the axis (34) of the rollers (26) or slide elements.

11. Luggage rack according to one of Claims 1 to 10, characterized in that there is provided at the front end of the slide rails (7, 8) a locking part (37) which is pivotal against the action of the spring and which cooperates with the receiving part (28, 29) in the transport position and thus locks the slide rail.

12. Luggage rack according to Claim 11, characterized in that the locking part (37) is lockable in the position latched with the receiving part (28, 29) by means of a lock (41).

13. Luggage rack according to one of Claims 10 to 12, characterized in that the stop element (31) cooperates in the transport position with a securing part arranged at the rear end of the mounting rail (4, 5), this securing part preventing the slide rail (7, 8) from being lifted off.

14. Luggage rack according to one of Claims 1 to 9, characterized in that at the front end of the slide rail (7, 8), associated with the rollers (26) or slide elements in the transport position, a stop element (54) is adjustably held which in the transport position lies against the rollers or slide elements and locks the slide rail (7) or lock.

15. Luggage rack according to Claim 14, characterized in that the stop element (54) is secured to a leaf spring (56) whereof one end is secured to the transverse web (43) of the slide rail (7, 7') lying opposite the slit (19) and whereof the other end projects from the slide rail as a handle (58), and in that the stop element (54) is guided in a bore (55) of the transverse web (43).

16. Luggage rack according to one of Claims 1 to 15, characterized in that a lockable end piece (64) is pushable onto the end of the slide rail (7, 8).

**Revendications**

1. Porte-bagages pour véhicules, notamment pour caravanes ou autos-caravanes, comprenant une partie de base (2) qui peut être fixée sur le véhicule et une partie supérieure (3) qui reçoit les objets à transporter, qui s'appuie sur la partie de base et qui comporte au moins deux rails de glissement creux (7, 8) dont chacun est muni d'une fente continue et dans lesquels sont reçus des galets (26, 48) ou des organes de glissement disposés aux extrémités de rails porteurs (4, 5) de la partie de base, symétriquement par rapport à ceux-ci, et destinés aux rails de glissement, caractérisé par le fait que les rails de glissement (7, 8) de la partie supérieure (3) sont reliés entre eux de manière flexible ou, respectivement, en étant mobiles l'un par rapport à l'autre.

2. Porte-bagages selon la revendication 1, caractérisé par le fait que les rails de glissement (7, 8) sont reliés entre eux par des entretoises (9, 10) ou par les objets à transporter (46).

3. Porte-bagages selon la revendication 1 ou 2, caractérisé par le fait qu'aussi bien le rail porteur (4) que le rail de glissement (7) présentent pour l'essentiel une section transversale en H, les ailes en saillie vers le haut et vers le bas étant à chaque fois recourbées vers l'intérieur à leurs extrémités, et leurs bords (18', 19'; 20', 21') délimitant à chaque fois une fente supérieure et une fente inférieure (18, 19; 20, 21).

4. Porte-bagages selon l'une des revendications 1 à 3, caractérisé par le fait qu'à celles des extrémités des rails porteurs (4, 5) sur lesquelles on tire et on fait basculer les rails de glissement (7, 8), sont disposés des supports (25, 49) qui sont destinés aux galets (26, 48) ou aux organes de glissement et qui maintiennent à chaque fois, avant la surface d'appui destinée aux rails de glissement (7, 8), et au-dessus de celle-ci, deux galets (26, 48) ou organes de glissement montés en rotation de manière coaxiale l'un par rapport à l'autre, et par le fait que chaque support (25, 49) pénètre, à travers la fente (19) du rail porteur associé (4, 5), dans le profilé creux qui est constitué par les ailes en saillie vers le bas et les bords recourbés vers l'intérieur, et dans lequel sont reçus dans leur totalité les galets (26, 48) ou les organes de glissement.

5. Porte-bagages selon l'une des revendications 1 à 4, caractérisé par le fait que les galets (26, 48) ou les organes de glissement sont réalisés sous forme arrondie sur leurs surfaces frontales extérieures (50).

6. Porte-bagages selon l'une des revendications 1 à 5, caractérisé par le fait que chaque rail de glissement (7, 8) de la partie supérieure (3), avec sa fente (14) vers le bas, est entièrement situé au-dessus du rail porteur associé (4, 5), et en alignement avec lui, celui-ci comportant à chaque fois une nervure de guidage (22) qui, dans la position de transport, pénètre sans jeu dans la fente (19) du rail de glissement (7, 8).

7. Porte-bagages selon la revendication 6, caractérisé par le fait que la nervure de guidage (22) est constituée en une matière présentant de bonnes propriétés de glissement, et qu'elle présente une forme renflée en section transversale, la région dont la largeur est la plus grande (24), laquelle dépasse un peu la largeur de la fente des rails de glissement (7, 8), se trouvant, en position de transport, à l'intérieur du rail de glissement creux (7, 8).

8. Porte-bagages selon la revendication 6 ou 7, caractérisé par le fait que, dans la position de transport, la surface (42) de la paroi intérieure de l'âme transversale (43) du rail de glissement (7, 8) qui fait face à la fente (19) repose sur le haut de la nervure de guidage (22).

9. Porte-bagages selon l'une des revendications 1 à 8, caractérisé par le fait qu'à chaque rail porteur (4, 5) sont associés deux rails de glissement (7', 8'; 7'', 8'') qui peuvent être retirés dans des directions opposées sur les rails porteurs (4, 5).

10. Porte-bagages selon l'une des revendications 1 à 9, caractérisé par le fait que, sur un côté extérieur au moins de chaque rail porteur (4, 5), et à chaque extrémité portant un support (25), il est prévu une pièce d'arrêt fixe (28, 29) pour un organe de butée (31) qui est disposé à l'extrémité arrière du rail de glissement (7), et sur son côté extérieur, et qui correspond au diamètre des galets (26) ou des organes de glissement, et par le fait que le centre (33) de l'évidement (30) de la pièce d'arrêt (28, 29) qui reçoit l'organe de butée (31) est aligné avec l'axe (34) des galets (26) ou des organes de glissement.

11. Porte-bagages selon l'une des revendications 1 à 10, caractérisé par le fait qu'il est prévu, à l'extrémité avant des rails de glissement (7, 8), une pièce de blocage (37) qui peut pivoter à l'encontre de l'action d'un ressort et qui coopère avec la pièce d'arrêt (28, 29), dans la position de transport, pour verrouiller le rail de glissement.

12. Porte-bagages selon la revendication 11, caractérisé par le fait que la pièce de blocage (37) peut être verrouillée par une serrure (41) dans la position où elle est encliquetée sur la pièce d'arrêt (28, 29).

13. Porte-bagages selon l'une des revendications 10 à 12, caractérisé par le fait que l'organe de butée (31) coopère, dans la position de transport, avec une pièce de retenue qui est disposée à l'extrémité arrière du rail porteur (4, 5) et qui empêche de soulever le rail de glissement (7, 8).

14. Porte-bagages selon l'une des revendications 1 à 9, caractérisé par le fait qu'un organe de butée (54) est maintenu en pouvant être déplacé à l'extrémité avant du rail de glissement (7, 8) qui est associée, dans la position de transport, aux galets (26) ou aux organes de glissement, organe qui, dans la position de transport, repose sur les galets ou les organes de glissement et ferme le rail de glissement (7) ou, respectivement, le verrouillage.

15. Porte-bagages selon la revendication 14, caractérisé par le fait que l'organe de butée (54) est fixé à une lame de ressort (56) dont une extrémité est fixée à l'âme transversale (43) du rail de glissement (7, 7') qui fait face à la fente (19), et dont l'autre extrémité, réalisée en forme d'organe de préhension (58), fait saillie hors du rail de glissement, et par le fait que l'organe de butée (54) est guidé dans un perçage (55) de l'âme transversale (43).

16. Porte-bagages selon l'une des revendications 1 à 15, caractérisé par le fait qu'une pièce d'extrémité verrouillable (64) peut être passée sur l'extrémité du rail de glissement (7, 8).

Fig.1

EP 0 101 054 B1

Fig. 3

Fig. 2

Fig.4

Fig.5

Fig.8

Fig.6

Fig.7

Fig.9

Fig.10

*Fig.11*